# FASCICULE DE BREVET EUROPEEN

(11) **EP 3 738 832 B1**
(45) Date de publication et mention de la délivrance du brevet: **21.07.2021**
(21) Numéro de dépôt: 20168894.2
(22) Date de dépôt: 09.04.2020
(51) Int. Cl.: B60R 11/00, B60R 11/02

(54) **SUPPORT INTERNE D'OBJET DÉBRAYABLE POUR VÉHICULE AUTOMOBILE**
INNENHALTERUNG EINES AUSKUPPELBAREN OBJEKTS FÜR KRAFTFAHRZEUG
INTERNAL SUPPORT FOR RELEASABLE OBJECT FOR A MOTOR VEHICLE

(30) Priorité: 14.05.2019 FR 1905032
(43) Date de publication de la demande: 18.11.2020
(73) Titulaire: Renault S.A.S., 92100 Boulogne-Billancourt (FR)
(72) Inventeur: BEZEAULT, LOIC, 78150 LE CHESNAY (FR); HEWAK, GREGOR, 95490 VAUREAL (FR)

(56) Documents cités:
- EP-A1- 0 178 196
- EP-A2- 0 949 138
- US-A1- 2004 130 184

## Description

L'invention concerne un agencement comprenant un support pour accrocher ou maintenir un objet au sein d'un véhicule automobile. L'invention porte encore sur un véhicule comprenant un tel agencement.

Un véhicule automobile comprend généralement au moins deux places assises à l'avant et au moins deux places assises à l'arrière. Des objets, en particuliers des objets de type périphériques électriques et/ou électroniques, par exemple des tablettes ou ordinateurs ou téléphones, sont généralement utilisés par les passagers. Ainsi les passagers discutent, échangent sur différents sujets dans le véhicule automobile, et se transmettent de tels objets de sorte à montrer des informations, vidéos, ou autres, en particulier sur les écrans de tels objets. Pour faciliter leurs échanges, un support de type poutre s'étend depuis l'avant vers l'arrière, au sein de l'habitacle, entre les places assises droites et les places assises gauche. Un tel support comprend des moyens de fixation de tels objets.

Lorsqu'il est difficile d'accéder à la place du conducteur du côté gauche, respectivement du côté droit, on accède généralement par la portière opposée c'est-à-dire droite, respectivement par la portière gauche, pour rejoindre la place conducteur au sein de l'habitacle. La sortie du véhicule pour le conducteur, ou un passager avant, peut également se faire par une portière du côté opposé à celle qui est adjacente à la place occupée. De telles situations se produisent lorsqu'une place de stationnement est étroite et/ou que le ou les véhicules voisins sont garés trop près du véhicule dans lequel on veut accéder ou sortir et/ou qu'un obstacle empêche l'ouverture de la portière adjacente à la place occupée. Le document US 2004/130184 A1 décrit un agencement selon le préambule de la revendication 1.

Le but de l'invention est de fournir un support remédiant aux inconvénients ci-dessus. En particulier, l'invention propose un agencement offrant un support permettant de supporter un objet à proximité de la planche de bord ou en dessous de celle-ci.

Pour atteindre cet objectif, l'invention porte sur un agencement comprenant :
- une caisse de véhicule, notamment de véhicule automobile, la caisse comprenant une partie avant, notamment une partie avant comprenant un tablier et/ou un tunnel de soubassement, et une partie arrière, notamment une paroi de la caisse au niveau des dossiers de sièges arrières,
- un support intérieur de type poutre destiné à permettre la fixation et/ou le coulissement et/ou la recharge électrique d'au moins un objet, notamment un objet électrique et/ou électronique, le support comprenant au moins un moyen de fixation d'un tel objet, notamment une rainure, s'étendant au moins partiellement suivant la longueur du support, le support s'étendant ou s'étendant sensiblement selon la direction longitudinale du véhicule entre la partie avant de la caisse et la partie arrière de la caisse, l'agencement comprenant :
- une liaison pivot, d'axe de direction transversale ou sensiblement transversale, de fixation du support au niveau de la partie arrière de la caisse de sorte à permettre une rotation du support autour de l'axe ou sensiblement autour de l'axe de la liaison pivot, notamment entre une position haute et une position basse, et
- un moyen de maintien en position du support au niveau de la partie avant de la caisse.

L'agencement peut comprendre une béquille de traverse de planche de bord, notamment comprenant une première tôle conformée s'étendant sensiblement verticalement et longitudinalement, la béquille pouvant comprendre un élément de réglage du moyen de maintien, notamment une première lumière.

L'agencement peut comprendre un renfort, notamment une deuxième tôle conformée s'étendant sensiblement verticalement et longitudinalement, la béquille et le renfort pouvant être fixés l'un à l'autre, notamment par soudage,
et/ou la béquille et le renfort pouvant être fixés au tablier et/ou au tunnel de soubassement, notamment par soudage.

Le moyen de maintien peut comprendre une première lumière ménagée dans la béquille et une deuxième lumière ménagée dans le renfort, la première lumière et la deuxième lumière pouvant être agencées en vis-à-vis l'une de l'autre.

Le moyen de maintien peut comprendre un moyen de serrage de la béquille, notamment de la béquille et du renfort, s'étendant selon une direction transversale ou sensiblement transversale, notamment un axe de serrage traversant la première lumière et la deuxième lumière, de sorte à verrouiller ou déverrouiller le support par rapport à la béquille, notamment en position haute ou en position basse.

Le moyen de serrage peut comprendre une manette d'actionnement du moyen de serrage, notamment pivotante de sorte à libérer le serrage de la béquille, ou de la béquille et du renfort, en cas de pivotement dans un premier sens et de sorte à assurer le serrage contre la béquille, ou contre la béquille et le renfort, en cas de pivotement dans un deuxième sens, opposé au premier sens.

Le moyen de maintien peut comprendre un moyen de rappel, notamment vers la position haute.

Le moyen de rappel peut comprendre :
- au moins un ressort,
- une patte, notamment réglable ou fixe par rapport au support et/ou par rapport à la béquille,
l'au moins un ressort s'étendant notamment entre la patte et le moyen de serrage, notamment l'axe de serrage.

L'angle de rotation du support entre la position haute et la position basse peut être compris entre 3 degrés et 10 degrés, notamment de l'ordre de 5 degrés.

L'invention porte encore sur un véhicule, notamment un véhicule automobile, comprenant un agencement tel que défini précédemment.

Ces objets, caractéristiques et avantages de la présente invention seront exposés en détail dans la description suivante d'un mode de réalisation d'un véhicule automobile, faite à titre non-limitatif en relation avec les figures jointes parmi lesquelles :
[fig.1] La figure 1 est une vue schématique partielle en perspective d'un véhicule automobile selon un mode de réalisation de l'invention.
[fig.2] La figure 2 est une vue partielle en perspective d'un agencement du véhicule automobile selon le mode de réalisation de l'invention, un support de l'agencement étant représenté à la fois dans une position basse et dans une position haute.
[fig.3] La figure 3 est une vue en perspective partielle de l'agencement selon le mode de réalisation de l'invention, le support étant en position haute.
[fig.4] La figure 4 est une autre vue en perspective partielle de l'agencement selon le mode de réalisation de l'invention, le support étant en position basse.
[fig.5] La figure 5 est une section selon un plan P du support de l'agencement selon le mode de réalisation de l'invention.
[fig.6] La figure 6 est une autre vue en perspective partielle de l'agencement selon le mode de réalisation de l'invention, le support étant en position haute.
[fig.7] La figure 7 est une vue de détail en perspective de l'agencement selon le mode de réalisation de l'invention.
[fig.8] La figure 8 est une vue de détail d'une traverse de planche de bord et d'une béquille de traverse de planche de bord selon le mode de réalisation de l'invention.
[fig.9] La figure 9 est une vue en perspective d'une patte fixe de l'agencement selon le mode de réalisation de l'invention, le support étant en position haute.
[fig.10] La figure 10 est une vue en perspective d'une patte réglable de l'agencement selon une première variante du mode de réalisation de l'invention, le support étant en position haute.
[fig. 11] La figure 11 est une vue en perspective de la patte réglable de l'agencement selon la première variante du mode de réalisation de l'invention, le support étant en position basse.
[fig.12] La figure 12 est une vue en perspective d'un détail de l'agencement selon le mode de réalisation de l'invention ou la première variante du mode de réalisation.
[fig.13] La figure 13 est une vue en perspective partielle d'un agencement selon une deuxième variante du mode de réalisation de l'invention, le support étant en position haute.
[fig.14] La figure 14 est une vue en perspective partielle d'un agencement selon la deuxième variante du mode de réalisation de l'invention, le support étant en position basse.
[fig.15] La figure 15 est une vue de détail en perspective d'une traverse de planche de bord et d'une béquille de traverse de planche de bord de l'agencement selon la deuxième variante du mode de réalisation de l'invention.
[fig.16] La figure 16 est une vue de détail en perspective de la traverse de planche de bord et de la béquille de traverse de planche de bord de l'agencement selon la deuxième variante du mode de réalisation de l'invention.

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère orthonormé direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens « avant » correspond au sens dans lequel le véhicule automobile se déplace habituellement dans la direction longitudinale et est opposé au sens « arrière ».

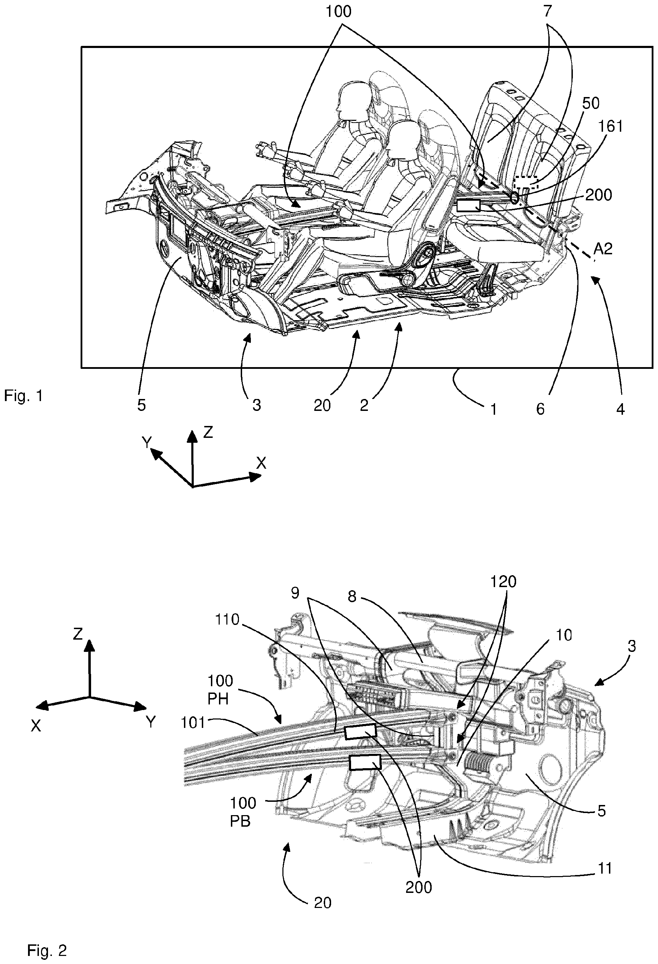

Un exemple de véhicule automobile 1, selon un mode de réalisation de l'invention, est illustré schématiquement sur la figure 1.

Le véhicule automobile 1 comprend un agencement 20 selon un mode de réalisation de l'invention.

L'agencement comprend encore une caisse 2 de véhicule automobile 1.

Comme illustré sur les figures 1 et 2, la caisse 2 comprend de préférence une partie avant 3. La partie avant 3 est, ou comprend, un tablier 5 et/ou un tunnel de soubassement 11. Le tablier 5 s'étend par exemple sensiblement dans un plan vertical et transversal YZ entre un habitacle et un compartiment moteur disposé à l'avant du véhicule. Le tunnel de soubassement 11 s'étend par exemple longitudinalement ou sensiblement longitudinalement au niveau du plancher du véhicule, par exemple jusqu'à une partie arrière 4 de la caisse 2. La caisse 2 comprend de préférence la partie arrière 4. La partie arrière 4 est, ou comprend, une paroi ou parclose 6 de la caisse 2 au niveau des dossiers et/ou assises de sièges arrière ou d'une banquette arrière 7.

L'agencement 20 comprend un support intérieur ou poutre 100. Le support 100 s'étend, ou s'étend sensiblement, selon la direction longitudinale du véhicule. De préférence, le support 100 s'étend entre un siège avant droit et un siège avant gauche, et entre un siège arrière droit et un siège arrière gauche ou au niveau du milieu de la banquette selon la direction transversale. Ainsi, selon le mode de réalisation, comme illustré sur les figures 1 et 2, le support 100 s'étend, ou s'étend sensiblement, dans un plan médian vertical et longitudinal XZ du véhicule automobile 1. Avantageusement, le support 100 s'étend entre la partie avant 3 de la caisse 2, par exemple au niveau du tablier 5 ou depuis le tablier 5 et/ou au niveau du tunnel de soubassement 11 ou depuis le tunnel de soubassement 11, et la partie arrière 4 de la caisse 2, par exemple au niveau ou depuis la paroi 6 de la caisse 2.

Le support 100 de type poutre, agencé à l'intérieur de l'habitacle, permet la fixation et/ou le coulissement et/ou la recharge électrique d'un objet 200 voire de plusieurs objets 200 avec le support 100. De préférence, le support 100 est, ou comprend, un profilé en alliage d'aluminium ou en aluminium. L'objet 200 est par exemple un objet électrique et/ou électronique.

Par la suite, par « objet », on entend par exemple un appareil ou périphérique électrique et/ou électronique, tel que par exemple une tablette ou un ordinateur ou un téléphone. L'objet 200 peut ne pas être électrique ou électronique. Quoi qu'il en soit, l'objet 200 comprend de préférence un élément de fixation apte à coopérer avec le support 100 de sorte que le support 100 puisse le supporter et/ou lui permettre de coulisser par rapport au support 100 et/ou le recharger électriquement.

Comme illustré en particulier sur les figures 2, 3 et 4, le support 100 comprend un moyen de fixation 110 de l'objet 200.

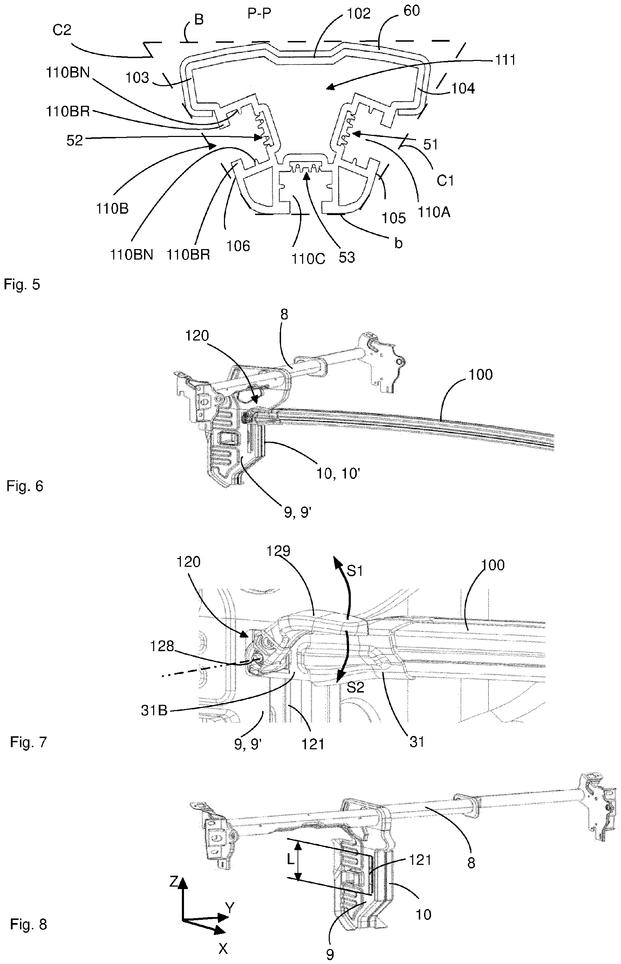

Comme illustré sur la figure 5, le moyen de fixation est par exemple une rainure ou glissière ou gorge 110A, 110B, 110C. La ou les rainures s'étendent au moins partiellement suivant la longueur du support 100. En d'autres termes le ou les moyens de fixation 110 s'étendent longitudinalement ou sensiblement longitudinalement, le support 100 s'étendant longitudinalement ou sensiblement longitudinalement au sein de l'habitacle.

De préférence encore, comme illustré sur la figure 5, la section du profilé est en forme de trapèze ayant une grande base B, agencée horizontalement ou sensiblement horizontalement, en haut, et une petite base b, agencée horizontalement ou sensiblement horizontalement, en bas. Ainsi, le moyen de fixation 110 comprend la rainure 110C ménagée en vis-à-vis ou au niveau de la petite base b du trapèze. La rainure 110C est orientée vers le bas. Avantageusement, le moyen de fixation 110 comprend les rainures 110A, 110B ménagées au niveau des deux autres côtés C1, C2 du trapèze. Ainsi, le mode de réalisation illustré porte sur un support 100 doté de trois rainures 110A, 110B, 110C en termes de moyens de fixation d'objet(s) 200 agencés en bas ou en-dessous du support 100 et munies d'ouvertures pour le passage des objets ou d'éléments de fixation fixés aux objets 200 à fixer. Avantageusement, les rainures sont orientées et/ou espacées de sorte à ce qu'un objet 200 puisse être fixé via la rainure 110A au support 100 et/ou de sorte à ce qu'un objet 200 puisse être fixé via la rainure 110B au support 100 et/ou de sorte en ce qu'un objet 200 puisse être fixé via la rainure 110C au support 100. Avantageusement encore, même en cas d'objets 200 fixés respectivement sur la rainure 110A et/ou sur la rainure 110B et/ou sur la rainure 110C, les objets 200 peuvent coulisser le long du support 100 et se croiser sans qu'un objet 200 interfère avec un autre objet 200. De préférence les rainures, en particulier leurs sections, sont identiques ou sensiblement identiques. Il est alors possible d'extraire un objet 200, ou l'élément de fixation permettant sa fixation, d'une des trois rainures et de fixer l'objet, ou l'élément de fixation permettant sa fixation, dans une autre rainure.

De préférence encore, comme illustré en particulier sur la figure 5, la section du profilé du support 100 comprend un creux 111.

De préférence, le support 100 comprend une piste électrique 51, 52, 53 au niveau de chaque rainure 110A, 110B, 110C du moyen de fixation 110 de l'objet 200. Alternativement, seulement une ou deux rainures comprend une piste électrique. Bien que le profilé illustré comprenne trois rainures, une autre forme de profilé comprenant moins ou davantage de rainures peut être retenue. De préférence, l'agencement 20 comprend une ou plusieurs prises électriques ou port électrique (non illustrée) pour pouvoir brancher un ou des objets 200. En cas de piste électrique et/ou de prise électrique, l'agencement 20 comprend un boîtier de connectique électrique 50. Par exemple, comme illustré schématiquement sur la figure 1, le boîtier 50 est agencé à l'arrière, au niveau de la paroi 6, voire derrière la paroi 6, par exemple au niveau du plancher de coffre ou encore dans le coffre. Dans ce cas, l'alimentation de la ou des pistes électriques se fait depuis l'arrière du support 100. Alternativement, le boîtier 50 est agencé à l'avant, par exemple au niveau du tablier 5, voire devant le tablier 5 au sein du compartiment moteur par exemple. De préférence, l'alimentation électrique, en particulier le boîtier 50 est disposé en fonction des alimentations électriques principales du véhicule automobile 1, par exemple à l'avant et/ou à l'arrière. Par exemple, le boîtier 50 ou l'alimentation est « clipsable » au niveau d'une fixation du support 100 sur la caisse 2 ou encore au niveau d'un manchon avant ou d'un manchon arrière. Alternativement, l'alimentation est intégrée, au moins en partie, au sein du support 100, par exemple dans un manchon. Ainsi, le boîtier 50 permet d'alimenter en courant électrique la piste électrique 51 et/ou la piste électrique 52 et/ou la piste électrique 53. En cas de davantage de pistes électrique et/ou de prise(s) électrique(s), le boîtier 50 permet de préférence également de les alimenter.

Comme illustré sur la figure 1, l'agencement 20 comprend une liaison pivot 161 de deuxième axe A2 de direction transversale ou sensiblement transversale. Cette liaison pivot 161 assure la fixation du support 100 sur ou au niveau de la partie arrière 4 de la caisse 2, par exemple sur la paroi 6. Ainsi, le support 100 est articulé autour du deuxième axe A2 par rapport à la caisse 2. Le support 100 peut ainsi pivoter autour ou sensiblement autour du deuxième axe A2. Le pivotement se fait de préférence entre une position haute PH et une position basse PB illustrées en particulier sur la figure 2.

Comme illustré en particulier sur les figures 2, 3, 4, 6 et 7, l'agencement 20 comprend encore un moyen de maintien 120 en position du support 100 au niveau de la partie avant 3 de la caisse 2. De préférence, ce moyen de maintien 120 comprend un manchon 31 fixé à l'avant du support 100. Le manchon est par exemple en acier et/ou en alliage d'aluminium. Par exemple le manchon 31 a des formes intérieures et/ou extérieures permettant de venir s'emmancher sur et/ou dans le profilé du support 100. Le manchon 31 est par exemple fixés au support 100, par collage et/ou soudage et/ou rivetage et/ou rivetage de type « pop » dans le profilé du support.

Avantageusement, l'agencement 20 comprend encore une béquille 9 de traverse 8 de planche de bord. Une telle traverse 8 s'étend par exemple transversalement, ou sensiblement transversalement, depuis un pied avant droit jusqu'à un pied avant gauche. La traverse 8 est alors maintenue, au moins partiellement, par la béquille 9. Avantageusement, la béquille 9 s'étend dans ou sensiblement dans le plan médian vertical et longitudinal du véhicule automobile 1. Par exemple, la béquille 9 comprend une première tôle ou flasque ou flanc 9'. La première tôle 9' est par exemple en acier et a par exemple une épaisseur comprise entre 1,2 mm et 2,4 mm, de préférence 1,8 mm. De préférence, cette première tôle 9' est conformée et s'étend verticalement, ou sensiblement verticalement, et longitudinalement, ou sensiblement verticalement.

Comme illustré sur les figures 7, 8 et 16, la béquille 9 comprend de préférence un élément de réglage du moyen de maintien 120 permettant de régler et/ou ajuster le positionnement du support 100. Avantageusement, l'élément de réglage comprend, ou est, une première lumière 121.

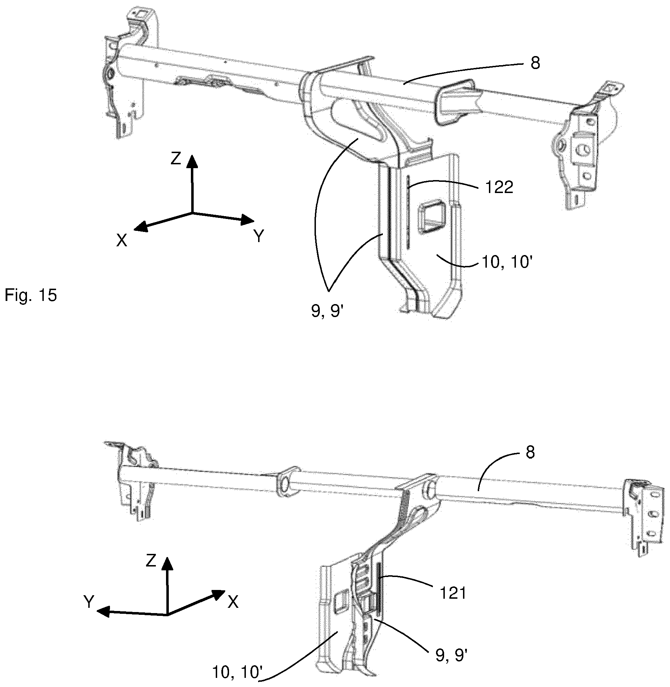

Avantageusement, comme illustré en particulier sur la figure 15, l'agencement 20 comprend encore un renfort 10 ou support de béquille. Le renfort 10 comprend par exemple une deuxième tôle ou flasque ou flanc 10'. La deuxième tôle 10' est par exemple en acier et a par exemple une épaisseur comprise entre 1,2 mm et 2,4 mm, de préférence 1,8 mm. De préférence, cette deuxième tôle 10' est conformée et s'étend verticalement, ou sensiblement verticalement, et longitudinalement ou sensiblement verticalement. A noter que la forme et/ou l'épaisseur de la béquille et/ou du renfort sont adaptées en fonction des contraintes mécaniques et vibratoires.

De préférence, la béquille 9 et le renfort 10 sont fixés l'un à l'autre, par exemple par soudage et/ou rivetage et/ou boulonnage. La béquille 9 et/ou le renfort 10 sont fixés au tablier 5 et/ou au tunnel de soubassement 11, par exemple par soudage et/ou rivetage et/ou boulonnage. La forme et/ou l'assemblage béquille et renfort peuvent être différentes, en particulier en fonction de l'avant de l'habitacle au niveau du poste de conduite et de l'espace passager avant.

En cas de renfort 10, de préférence le moyen de maintien 120 comprend d'une part la première lumière 121 ménagée dans la béquille 9 et d'autre part une deuxième lumière 122 ménagée dans le renfort 10. La première lumière 121 et la deuxième lumière 122 sont alors agencées en vis-à-vis, ou sensiblement en vis-à-vis, l'une de l'autre. La forme des lumières peut être rectiligne ou encore non rectiligne de manière à suivre la courbe engendrée par la rotation du support autour du deuxième axe A2. Ainsi, de préférence, la forme des lumières est curviligne et/ou en forme d'un arc de cercle dont le rayon a, ou a sensiblement, la longueur du support 100. L'interface de guidage par la béquille 9, c'est-à-dire par les lumières 121, 122 précisées ci-dessus, peut être différente, en fonction de l'espace disponible à l'avant de l'habitacle et/ou de la manipulation souhaitée au niveau du moyen de maintien.

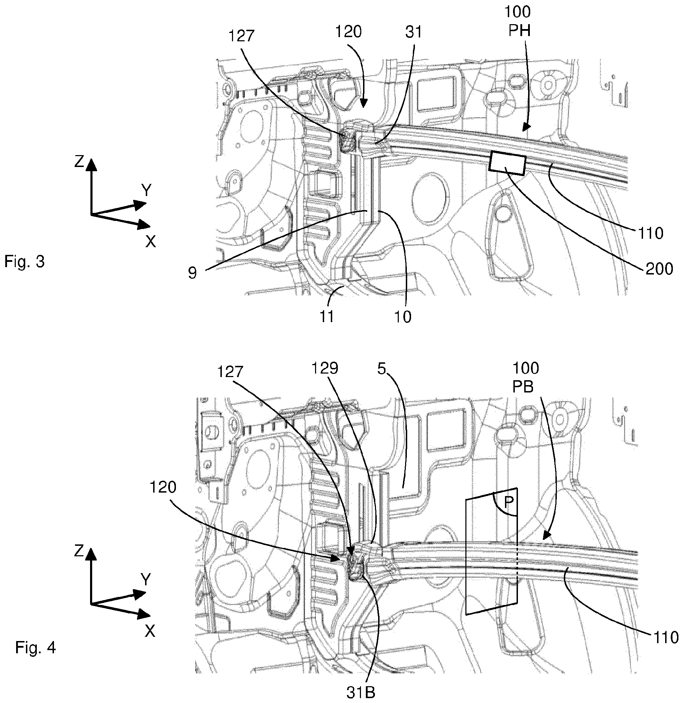

Comme illustré sur les figures 3 et 4, de préférence, le moyen de maintien 120 comprend un moyen de serrage 127 de la béquille 9, ou de la béquille 9 et du renfort 10. Ce moyen de serrage 127 s'étend selon la direction transversale ou sensiblement selon la direction transversale. Le manchon 31 s'étend de préférence de part et d'autre de la béquille 9, ou de part et d'autre d'un ensemble comprenant la béquille 9 et le renfort 10, suivant la direction transversale. Par exemple, comme illustré en particulier sur la figure 7, le moyen de serrage 127 comprend un axe de serrage 128 traversant la première lumière 121 de la béquille 9 de sorte à verrouiller ou déverrouiller le manchon 31 du support 100 par rapport à la béquille 9. En cas de présence du renfort 10, le moyen de serrage 127 comprend un axe de serrage 128 traversant la première lumière 121 de la béquille 9 et la deuxième lumière 122 du renfort 10 de sorte à permettre de verrouiller ou déverrouiller le manchon 31 du support 100 par rapport à la béquille 9 et au renfort 10. Le manchon est donc dédié à accueillir l'axe de serrage 128 qui assure également le guidage au sein des lumières. L'axe de serrage 128 est d'une part maintenu d'un côté du manchon 31, au niveau d'une partie 31A, et d'autre part maintenu du côté opposé du manchon 31, au niveau d'une partie 31B, selon la direction transversale. De préférence, ce moyen de serrage 127 comprend un excentrique à l'instar d'une « attache rapide » de moyeu de bicyclette. Ainsi une rotation de faible amplitude, ou un pivotement, engendre un déplacement d'une partie excentrique qui entraîne une translation axiale et par conséquent un effort axial au niveau de l'axe de serrage 128.

Ainsi, le serrage du moyen de serrage 127 agit sur l'axe de serrage 128 en le mettant en contrainte axialement. Les deux parties 31A, 31B du manchon 31 sont ainsi serrées contre et de part et d'autre de la béquille 9, ou contre et de part et d'autre de la béquille 9 et du renfort 10. Les première et deuxième tôles 9', 10' sont ainsi resserrées du fait de l'effort axial transmis de l'axe 128 aux parties 31A, 31B du manchon 31.

Le verrouillage et le déverrouillage du support 100 peuvent être effectués en particulier au niveau d'une position extrême en haut, appelée position haute PH ou au niveau d'une position extrême en bas, appelée position basse PB. De manière générale, le verrouillage du support 100 contre la béquille 9, ou contre la béquille 9 et le renfort 10, peut également être réalisé entre la position haute PH et la position basse PB. Le déverrouillage peut ainsi également être réalisé entre ces deux positions extrêmes.

De préférence encore, le moyen de serrage 127 comprend une manette ou poignée 129 d'actionnement du moyen de serrage 127 agencée sur le manchon 31. Avantageusement, cette manette 129 est pivotante.

Cette manette 129 permet de libérer le serrage du manchon 31 par rapport à la béquille 9, ou de libérer le serrage du manchon 31 par rapport à la béquille 9 et au renfort 10. Pour cela, la manette 129 est tournée ou pivotée par l'utilisateur autour ou sensiblement autour de l'axe de serrage 128, dans un premier sens S1, par exemple le sens anti horaire, illustré par une flèche sur la figure 7. L'axe de serrage 128, libéré de sa contrainte axiale, desserre alors les parties 31A, 31B du manchon. De façon alternative, le moyen de maintien comprend un ressort facilitant la manipulation de la manette pour passer d'une position verrouillée à une position déverrouillée et inversement.

A l'inverse, pour assurer le serrage du manchon 31 contre la béquille 9, ou assurer le serrage du manchon 31 contre la béquille 9 et contre le renfort 10, la manette 129 est tournée ou pivotée par l'utilisateur autour ou sensiblement autour de l'axe de serrage128, dans un deuxième sens S2 opposé au premier sens S1, par exemple le sens horaire, illustré par une flèche sur la figure 7. L'axe de serrage 128 serre alors les parties 31A, 31B du manchon.

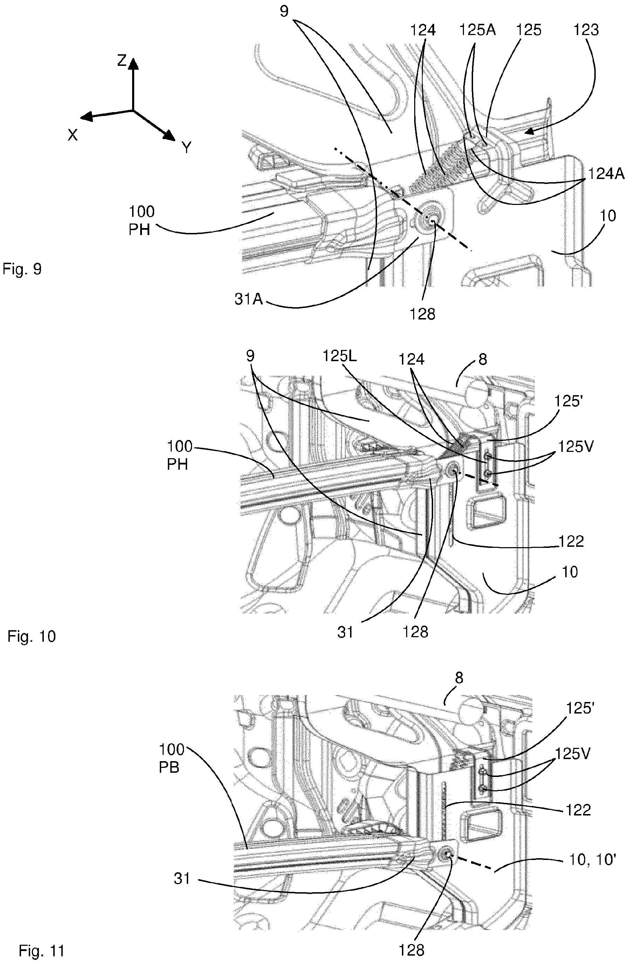

Selon le mode de réalisation illustré aux figures 9 et 11, le moyen de maintien 120 comprend un moyen de rappel 123. De préférence, ce moyen de rappel facilite le retour et/ou le maintien en position haute PH le support 100.

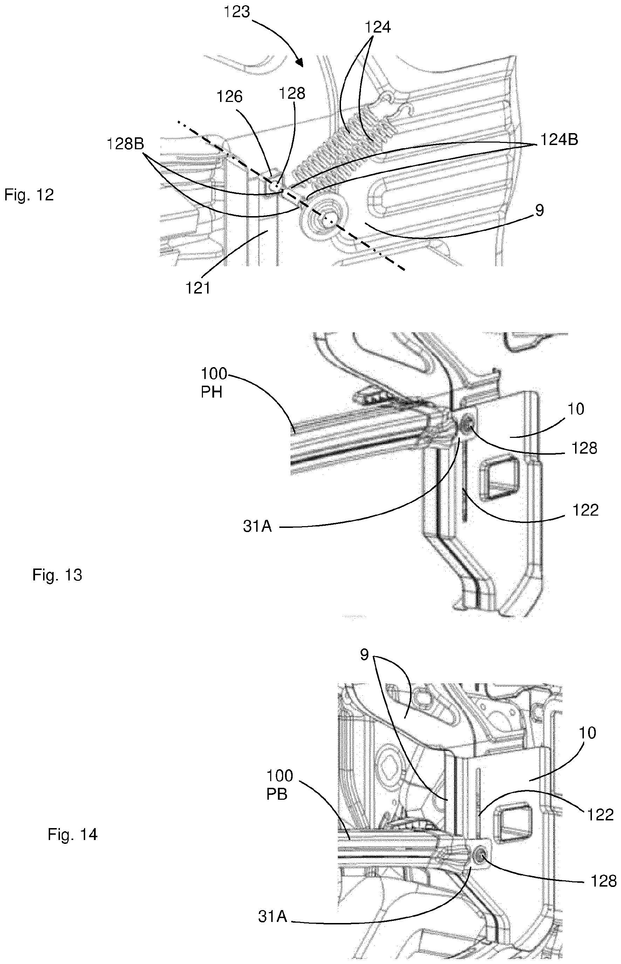

Comme illustré sur la figure 9, le moyen de rappel 123 comprend au moins un ressort 124, de préférence deux ressorts 124, et au moins une patte 125. La patte 125, de préférence dotée de trous 125A, permet de fixer ou recevoir ou retenir des premières extrémités 124A des ressorts 124. La patte 125 est fixe par rapport à la béquille 9. En cas de présence de renfort 10, la patte 125 est également fixe par rapport au renfort 10. De préférence, la patte 125 est venue de matière et/ou conformée avec ou dans le renfort 10, par exemple conformée dans la tôle 10'. Comme illustré en particulier sur la figure 12, de préférence les deuxièmes extrémités 124B des ressorts 124 sont fixées ou reçues ou retenues au niveau de l'axe de serrage 128, par exemple autour de l'axe de serrage 128. Dans ce cas, l'axe de serrage 128 comprend par exemple deux gorges 128B de sorte à maintenir constamment les deux extrémités 124B des ressorts d'un écart défini. Ainsi, les ressorts 124 s'étendent entre la patte 125 et le moyen de serrage 127, par exemple directement sur l'axe de serrage 128.

Par exemple, l'angle de rotation du support 100 entre la position haute PH et la position basse PB est compris entre 3 degrés et 10 degrés, de préférence de l'ordre de 5 degrés. Cet angle ou course de pivotement autour de l'axe A2 de la liaison pivot 161 est défini notamment par la longueur L de la première lumière 121 illustrée sur la figure 8, ou la longueur de la première lumière 121 et de la deuxième lumière 122 en cas de renfort 10. Cet angle ou course dépend également du diamètre de l'axe de serrage 128 au niveau de la ou des lumières et/ou de l'encombrement d'un patin de glissement 126, ou plusieurs, au sein de la ou des lumières comme illustré sur la figure 12. Ainsi, les dimensions des lumières déterminent la liaison avec l'axe de serrage 128 qui fait également office d'axe de guidage au sein des lumières. Ainsi, la forme de l'axe de serrage 128, son diamètre, la largeur des lumières et la course en hauteur entre la position basse et la position haute du support 100 influent sur l'angle de pivotement du support 100. De préférence, cette course en hauteur entre les positions haute et basse est comprise entre 100 et 200 mm, par exemple de 145 mm. Cette course est mesurée par rapport à la position du tube de la traverse de planche de bord suivant la direction longitudinale X.

Selon une première variante du mode de réalisation illustrée sur les figures 10 et 11, la patte 125' est réglable selon la direction verticale ou sensiblement verticale. La patte 125' est alors fixée à la béquille 9 et/ou au renfort 10 par exemple par boulonnage. De préférence, la patte 125' est fixée seulement au renfort 10. La patte 125' comprend par exemple une lumière 125L s'étendant verticalement ou sensiblement verticalement une fois montée sur le renfort 10. Par exemple, deux boulons ou vis 125V permettent de fixer la patte 125' sur le renfort 10. Ces moyens de fixation coopèrent alors avec la lumière 125L afin d'offrir une amplitude de réglage selon la direction verticale ou sensiblement verticale de la patte 125' par rapport au renfort 10. La patte 125' peut ainsi être réglée, ajustée, de manière à obtenir l'effort de tension requis des ressorts 124. Ainsi, le réglage de la remontée en particulier depuis la position basse PB vers la position haute PH est facilitée.

Dans une deuxième variante de mode de réalisation, illustrée en particulier sur les figures 13 et 14, l'agencement est dépourvu de moyen de rappel. En cas de desserrage du moyen de serrage et d'absence de frottement du support contre la béquille, ou du support contre la béquille et le renfort, le support rejoint la position basse PB ou sensiblement la position basse PB. En effet, la gravité agit alors de manière à engendrer un pivotement du support 100 vers le bas autour du deuxième axe A2 de la liaison pivot 161. Par exemple, seul le serrage contre la béquille 9, ou seul le serrage contre la béquille 9 et le renfort 10, au niveau de la position haute PH, permet de maintenir le support 100 en position haute et/ou dans une position intermédiaire entre la position basse et la position haute.

Un mode d'exécution d'un procédé de déplacement de la position haute PH à la position basse PB puis de la position basse PB à la position haute PH du support 100 de l'agencement 20 selon le mode de réalisation de l'invention est décrit ci-après.

La position de départ est la position haute PH du support 100 au sein du véhicule automobile 1. Le procédé comprend une étape de déverrouillage. Cette étape de déverrouillage est assurée par la rotation de la manette 129 dans le premier sens S1 par exemple. Cette rotation engendre un desserrage du moyen de serrage 127 par rapport à la béquille 9. Le manchon 31 n'est alors plus contraint contre la béquille, ou contre la béquille et le renfort, par le moyen de serrage. En déverrouillant, les partie 31A, 31B sont écartées. Le procédé comprend ensuite une étape de déplacement du support 100 vers le bas, autrement dit un pivotement autour du deuxième axe A2 de la liaison pivot 161 du support 100 entraînant l'avant du support 100 vers le bas, de préférence jusqu'à la position basse PB. Au cours de cette étape de déplacement, le moyen de serrage, en particulier l'axe de serrage 128 coulisse au sein de la lumière 121 ou au sein des lumières 121, 122. En cas de moyen de rappel, par exemple doté de ressorts 124, c'est-à-dire le mode de réalisation comprenant la patte fixe 125 ou la première variante comprenant la patte réglable 125', cette étape de déplacement vers le bas nécessite de pallier l'effort fourni par les ressorts 124. Dans la deuxième variante de réalisation, sans patte ni ressort de rappel, le support s'abaisse aisément, notamment aidé par la gravité.

Eventuellement, une fois arrivé en position basse par exemple, le procédé comprend alors une étape de verrouillage. Cette étape de verrouillage est assurée par la rotation de la manette 129 dans le deuxième sens S2. Cette rotation engendre un serrage du manchon 31 par rapport à la béquille 9. La béquille 9 est alors serrée, ou la béquille et le renfort sont serrés, par le moyen de serrage qui rapproche les parties 31A, 31B.

Une fois que l'utilisateur a enjambé et/ou est passé au-dessus du support 100, le support 100 est à nouveau replacé en position haute PH.

Pour ce faire, dans le mode de réalisation et la première variante comprenant les ressorts de rappel, il suffit de laisser agir les ressorts et, éventuellement les aider à soulever le support 100 jusqu'à la position haute PH. Le procédé comprend alors une étape de verrouillage une fois la position haute atteinte. Ce verrouillage est obtenu par rotation ou pivotement de la poignée 129 dans le deuxième sens S2 par exemple.

Dans la deuxième variante du mode de réalisation, sans ressort ni patte, le procédé comprend une étape de levée par l'utilisateur du support 100 pour le passer de la position basse à la position haute. Comme dans les autres cas, le procédé comprend alors une étape de verrouillage une fois la position haute PH atteinte. Ce verrouillage est obtenu par rotation ou pivotement de la poignée 129 dans le deuxième sens S2 par exemple.

En résumé, l'agencement 20 doté du support 100 mobile et débrayable facilite l'accès et la sortie du véhicule automobile 1 par les entrées ou portières opposées. Ainsi, en cas de volonté d'accéder ou sortir de la place avant droite par l'entrée ou portière avant gauche, respectivement de la place avant gauche par l'entrée ou portière avant droite, il suffit d'abaisser le support 100 pour que le passage entre les places avant soit facilité. En effet, un tel pivotement permet de passer de la position haute PH qui entrave le passage entre la place avant gauche et la place avant droite, à la position basse PB qui libère davantage ce passage entre les places avant.

On peut noter qu'en position basse PB, le passage entre les places arrière 7 gauche et droite est également facilité, bien que le support 100 ne pivote que d'un angle relativement faible au niveau de la liaison pivot 161.

Grâce à cet agencement offrant une position basse PB, il devient aisé d'enjamber et/ ou passer au-dessus du support 100 de droite à gauche ou vice versa, en particulier au niveau du premier rang de l'habitacle, c'est-à-dire des places avant. En cas de places de parking contraintes par exemple, l'accès et/ou la sortie du véhicule sont facilités. La position basse PB du support 100 est compatible au sein de l'espace de l'habitacle avec la présence d'un frein à main, même enclenché, autrement dit activé ou serré et/ou la présence d'un levier de vitesses. En position haute PH, le support 100 s'étend au-dessus de la commande de frein à main, par exemple enclenché, et/ou au-dessus du levier de vitesses.

A noter que la descente ou pivotement du support 100 entre la position haute et la position basse est sans contrainte par son propre poids par exemple, ou encore amorties par les ressorts 124 de sorte à rendre le mouvement contrôlé et/ou fluide, voire empêchée par les ressorts 124. La montée ou pivotement du support 100 entre la position basse et la position haute peut être aidée par l'action des ressorts de sorte à ce que l'utilisateur n'ait pas ou que peu à fournir d'effort. De préférence, les spires des ressorts sont constamment en contrainte, aussi en position haute qu'en position basse ou qu'en position intermédiaire. Cette contrainte continue permet d'offrir une meilleure stabilité au moyen de maintien.

Quoi qu'il en soit l'agencement 20 offre un support 100 bénéficiant d'un système de déverrouillage et de débrayage aisément accessible par l'utilisateur et ayant une cinématique stable, fiable et simple.

Avantageusement, comme illustré en particulier sur la figure 2, le support 100 présente au moins un cintrage 101. De préférence, le support 100 ne comprend qu'un cintrage 101, par exemple de rayon de cintrage constant, dont le centre de cintrage est situé dans ou sensiblement dans un plan vertical et longitudinal XZ centré ou sensiblement centré transversalement par rapport au support 100. Le centre de cintrage est alors de préférence en-dessous du support 100. Alternativement ou en complément, le support 100 comprend un cintrage dont le centre de cintrage est situé dans ou sensiblement dans le plan vertical et longitudinal XZ centré ou sensiblement centré transversalement par rapport au support 100, et au-dessus du support 100. Alternativement ou en complément, le support 100 comprend un cintrage dont le centre de cintrage est situé en dehors du plan vertical et longitudinal XZ centré ou sensiblement centré transversalement par rapport au support 100, en dessous ou au-dessus du support 100.

A noter que le dessus du support 100 peut ne pas être destiné à recevoir de moyen de fixation pour objet 200 et est alors exempt de moyen de fixation. Le dessus du support 100 est alors par exemple lisse, ou sensiblement lisse, dans un but esthétique. Eventuellement, comme illustré en particulier sur la figure 5, le dessus du support 100 est doté d'une gorge 102 s'étendant longitudinalement, ou sensiblement longitudinalement, c'est-à-dire suivant la longueur du support 100. De préférence, le support 100 est alors recouvert au moins partiellement d'un habillage ou coque 60. Par exemple cet habillage est en forme de queue d'aronde et vient se clipper sur le support 100, ou coulisser le long du support 100. Avantageusement, l'habillage 60 recouvre seulement le dessus et une partie ou l'intégralité de deux flans latéraux supérieurs 103, 104 du profilé du support 100, sur et/ou derrière lesquels l'habillage 60 vient se fixer par exemple. Cet habillage est par exemple en matière plastique de type polypropylène PP ou polyamide PA ou en polymère à base de caoutchouc ou de type textile enduit de plastique TEP, ou encore en cuir, en tissu ou dans un matériau naturel ou synthétique équivalent.

Comme illustré en particulier sur la figure 5 pour la rainure 110B, la rainure a une section ouverte de type rectangle avec deux retours 110BR sur l'extérieur et deux nervures 110BN sur les faces latérales intérieures. Les deux retours 110BR permettent de retenir un élément de fixation d'un objet 200, par exemple un système d'accroche et de glissement. Les deux nervures 110BN servent quant à elles par exemple à guider un tel système d'accroche et de glissement. Au fond de la rainure 110B par exemple, une gouttière, gouge ou gorge permet de loger la piste électrique 52 comme précisé précédemment. Ainsi, les objets peuvent être déplacés en particulier depuis les places assise avant vers les places assise arrière ou inversement, via le coulissement le long du support 100.

En outre, les objets peuvent être déplacés d'un côté à un autre côté en passant de la rainure 110A à la rainure 110B et vice versa. Enfin, il peut être envisagé que le nombre d'objets 200 supportés par le support 100 soit supérieur à trois et/ou que plusieurs objets 200 soient supportés dans une même rainure. Evidemment, ces fonctions dépendent de la taille et/ou de la forme des objets 200. En outre, ces fonctions peuvent dépendre de la taille et/ou de la forme de l'élément de fixation destiné à coopérer avec chaque rainure.

Alternativement le support peut comprendre une seule rainure, deux rainures ou au-delà de trois rainures. Le support peut avoir une section, en particulier son profilé, différente. En outre, le support peut avoir une section différente tout en comprenant trois rainures également. Au-delà de trois rainures par exemple, le support utilise une section de surface supérieure. Par exemple, seulement une ou certaines rainures sont équipées d'une piste électrique.

Alternativement, le support peut comprendre un moyen de fixation d'objets 200 sur sa surface supérieure, par exemple en lieu et place de la gorge 102, de manière à pouvoir fixer et/ou faire coulisser et/ou recharger un objet 200.

Comme évoqué précédemment, l'agencement 20 peut comprendre une piste électrique, par exemple une piste ménagée au fond d'une ou de chaque rainure 110A, 110B, 110C. Ainsi, la connexion, en particulier électrique, entre les objets 200 et les systèmes d'accroche et de glissement sont compatibles.

Alternativement ou en complément, une ou d'autres pistes électriques peuvent être ménagées dans une même rainure. L'agencement, par exemple au niveau du support 100 au niveau d'une rainure ou en dehors d'une rainure, peut par exemple comprendre au moins une prise de sorte à pouvoir recharger électriquement un objet 200 et/ou de sorte à pouvoir transmettre des données, par exemple entre le véhicule et un objet 200 ou encore entre objets 200.

Comme évoqué précédemment et illustré sur la figure 1, la fixation de type liaison pivot 161 à l'arrière offre un moyen de pivotement. Ainsi, l'agencement 20 comprend une fixation arrière pour la fixation du support 100 sur la partie arrière 4 de la caisse 2. Par exemple, le support 100 comprend un manchon arrière, par exemple en alliage d'aluminium et/ou en acier. Avantageusement, le manchon arrière est, ou comprend, une partie moulée, par exemple en alliage d'aluminium. Cette partie moulée est par exemple de forme profilée et/ou alvéolée. Cette partie moulée est fixée au sein du profilé du support 100, par exemple par l'intermédiaire d'une ou plusieurs vis coopérant avec un ou plusieurs trous oblongs ménagés dans le support 100. La ou les vis viennent alors se visser dans des taraudages ménagés dans la partie moulée. Cette liaison permet un réglage selon la direction longitudinale ou sensiblement longitudinale du support 100 par rapport à la caisse 2. Avantageusement, cette partie moulée vient coopérer au sein du support 100, par exemple au sein du creux 111 du profilé. A titre d'exemple non limitatif, le manchon arrière est par exemple une pièce s'étendant sur une distance comprise entre 5 cm et 20 cm à l'intérieur du support 100 selon la direction longitudinale ou sensiblement selon cette direction, par exemple sur 10 cm. En outre la fixation arrière comprend par exemple une chape arrière, de préférence une chape arrière dotée d'un trou dans chaque aile de la chape arrière. La chape arrière est fixée au niveau de la partie arrière 4 de la caisse 2, par exemple sur la paroi 6. Ainsi, la fixation du support 100 est obtenue par le biais d'un axe s'étendant selon le deuxième axe A2 et coopérant d'une part avec un trou traversant le manchon arrière et d'autre part avec les trous dans la chape arrière. Ainsi, la liaison pivot 161 est obtenue entre le support 100 et la chape arrière. La chape arrière est fixée par exemple directement ou indirectement sur une partie fixe de la caisse 2, par exemple sur la paroi 6, par exemple par le biais d'au moins une vis et/ou d'au moins un rivet et/ou par soudage. La paroi 6 est de préférence en acier.

De préférence, le deuxième axe A2 et l'axe de serrage 128 sont parallèles ou sensiblement parallèles et s'étendent transversalement ou sensiblement transversalement de sorte à faciliter le montage au sein de la caisse 2.

A noter que d'autres ancrages de type liaisons pivot arrière par rapport à la caisse 2 et/ou moyen de serrage à l'avant par rapport à la béquille 9 peuvent convenir également. En outre, un ou les manchons peuvent venir se fixer sur l'extérieur du profilé du support 100 et non à l'intérieur. Le manchon avant peut avoir une forme de profil différent de celui du manchon arrière.

Par exemple, le mode de vibration « modal » est obtenu à environ 70 Hz pour le support seul. L'inertie (donc la section) du profilé du support 100 est donc choisie de manière adaptée. Les moyens de fixations sont également solides et adaptés pour assurer un comportement vibratoire adéquat du support et des objets. L'inertie structurelle principale du profilé est obtenue grâce au creux 111 au centre ou sensiblement au centre du profilé en forme de trapèze. Les trois rainures peuvent participer également à la tenue vibratoire. Par exemple, l'épaisseur du profilé est de 2,5mm sur le contour extérieur des creux 111. Par exemple, l'épaisseur est de l'ordre de 2 mm sur les contours des rainures 110A, 110B, 110C. Les moyens de fixations peuvent être équipés de systèmes filtrants de type support moteur (avec une base en caoutchouc).

Avantageusement, l'agencement 20 a une bonne tenue vibratoire de sorte que les vibrations de la caisse 2 ne sont pas transmises aux objets 200 ou que les vibrations sont atténuées.

Avantageusement, à l'arrière, un moyen d'amortissement des vibrations est agencé entre l'axe et le manchon arrière et/ou entre la chape arrière et le manchon arrière. Alternativement ou en complément, un moyen d'amortissement des vibrations est agencé entre la chape arrière et la caisse 2. Par exemple, les fixations à la structure de caisse 2 par chapes rigides utilisent des rondelles et/ou des entretoises en caoutchouc ou autre de sorte à filtrer les vibrations émises par la caisse 2 afin d'éviter qu'elles ne soient transmises au support 100. L'élément ou patin de glissement 126, illustré sur la figure 12, peut également permettre de filtrer les vibrations, par exemple en étant au moins partiellement en matériau amortissant.

Par exemple, le manchon avant et/ou le manchon arrière sont simplement insérés dans le profilé du support 100, éventuellement avec des jeux minimes. En effet, le maintien avant et le maintien arrière entre le profilé muni des manchons avant et arrière et la caisse 2 peut suffire, en particulier avec des moyens d'amortissement, notamment sous légère contrainte en cours de montage. Il peut également être prévu que le manchon avant et/ou le manchon arrière soient insérés dans les profilés sans jeu c'est-à-dire emmanché avec force.

L'agencement 20 permet de partager l'espace à bord entre le rang de places avant et le rang de places arrière et facilite le partage au sein de l'habitacle. Comme évoqué précédemment, le support 100 permet non seulement de fixer un ou plusieurs objets 200, mais également de déplacer les objets 200, voire de leur permettre de se croiser ou s'entrecroiser le long du support. En effet, plusieurs objets peuvent être supportés par le support 100, via une seule rainure, ou via deux rainures ou davantage, par exemple en fonction du niveau de finition du véhicule et/ou des efforts engendrés, en particulier des efforts dus à la masse du ou des objets 200 se répercutant au niveau des rainures 110A et/ou 110B et/ou 110C.

Divers déplacements d'objets sont compatibles et peuvent ainsi avoir lieu simultanément. De plus, grâce aux pistes électriques, une électrification des objets 200 est conservée. Ainsi, malgré un habitacle ou espace intérieur contraint, la communication et le partage, par exemple d'informations ou données sur des écrans, entre les occupants est améliorée. Une véritable zone communicante ou liaison autour du support 100 entre le ou les passagers avant et/ou le ou les passagers arrière demeure.

De préférence, les pistes électriques, par exemple en fond de gouge, fournissent une tension électrique de 12V. Le système d'accroche et de glissement permet avantageusement de se brancher aux pistes électriques quelles que soient les positions des objets. Ainsi, la fixation ou branchement d'un objet 200 dans une rainure crée par exemple la connexion à l'alimentation électrique et/ou à un réseau de données. L'extraction ou le débranchement de cet objet 200 de cette rainure crée par exemple la déconnexion de l'alimentation électrique et/ou la déconnexion du réseau de données.

Alternativement, des positions spécifiques sont prévues le long du support pour permettre la recharge électrique à ces positions spécifiques, ou sensiblement à ces positions spécifiques.

Alternativement ou en complément, une tension électrique de 48 V est disponible au niveau du support 100, en particulier au niveau des pistes électriques.

Bien que le support 100 ait été décrit principalement en vue de supporter des objets électriques et/ou électronique, il peut supporter un ou plusieurs moyens de rangement, par exemple un caisson, éventuellement coulissant. En outre, l'objet 200 peut être une interface homme-machine (IHM) de communication entre le véhicule et ses passagers. Celle-ci peut être en complément de l'interface généralement agencée sur un tableau de bord entre le conducteur et/ou le passager avant.

En outre, grâce à cet agencement, l'espace entre les passagers avant/arrière et droite/ gauche demeure ouvert, autrement dit dépourvu de cloisonnement ce qui permet de conserver une impression de volume d'habitacle conséquent. Le partage, par exemple d'utilisation d'un objet 200 entre plusieurs passagers est alors envisageable, en particulier en le faisant glisser ou coulisser le long du support 100 et/ou en le déplaçant d'une rainure à une autre rainure. Grâce à l'électrification agencée par exemple en fond de rainure, l'objet 200 transféré d'une rainure à une autre reprend sa recharge dès son nouvel emplacement. En outre, l'objet peut ainsi être connecté aux autres objets fixés au support 100 et connectés et/ou à l'ordinateur de bord du véhicule, par exemple pour pouvoir échanger des données avec l'ordinateur de bord.

Grâce au type de fixation à l'avant et à l'arrière sur la caisse 2, la tenue en vibratoire est satisfaite. Ces liaisons facilitent en outre le réglage selon la direction verticale et l'inclinaison du support tout en améliorent le montage en usine.

En outre, la forme des rainures participe à la tenue mécanique du ou des objets fixés en particulier sur le support 100 en cas de choc frontal ou latéral et offre une tenue à l'arrachement du ou des objets 200 fixés sous l'effet d'une accélération.

L'habillage 60 du profilé peut avantageusement être relativement mou, et/ou par exemple d'une épaisseur comprise entre 5 mm et 15 mm de sorte à offrir au moins des flancs latéraux souples. Ces parties souples sont alors aptes à absorber de l'énergie en cas de contact avec le corps d'un passager, en particulier à l'avant, lors d'un choc latéral par exemple.

Le support 100 peut également servir directement d'accoudoir avant et/ou arrière sans ajout d'élément supplémentaire. Avantageusement, l'habillage 60 comprend de la mousse ou un équivalent au niveau d'emplacements spécifiques de sorte à améliorer le confort lors du contact des coudes et/ou des avant-bras.

Par exemple, le support 100 est positionné dans l'habitacle dans un plan médian vertical et longitudinal XZ du véhicule. En outre, le support 100 en position haute PH s'étend selon la direction verticale et en termes d'inclinaison au niveau de la zone basse de l'abdomen et proche de la zone du bassin, au moins pour les passagers avants, de sorte à amoindrir les blessures en cas de contact lors d'un choc. Le cintrage 101 participe à ce positionnement optimum selon la direction verticale et en termes d'inclinaison qui offre un bon compromis entre les positions de fixations à la structure de caisse et la tenue au choc.

A noter que la position ou disposition des glissières ou rainures 110A, 110B, 110C en-dessous, ou sensiblement en-dessous du profilé au niveau des flancs latéraux par exemple, protège la ou les pistes électriques d'éventuelles coulées de liquide pouvant provoquer un court-circuit. En outre, ces rainures sont orientées et disposées de sorte qu'il peut difficilement être coincé un ustensile par inadvertance au sein de celles-ci. Ainsi, la probabilité d'un éventuel arc électrique demeure très faible.

L'agencement 20 comprend ainsi un système de débrayage simple et vertical du support 100 intégré et/ou guidé au moins en partie sur un élément du poste de conduite et/ou de la caisse 2, à savoir la béquille de traverse de planche de bord. En outre, l'espace au sein de l'habitacle ne s'en trouve pas modifié. Le support ou poutre 100 n'étant pas scindé en plusieurs parties, le support est moins sensible aux vibrations.

La course des objets 200 le long du support 100 peut ainsi aller vers l'avant jusque sous la planche de bord. En effet, la manette 129 et par conséquent le moyen de maintien sont avancés au plus près du tablier 5. L'espace ou zone de rangement s'en trouve augmenté, en particulier sous la planche de bord, ce qui permet de ranger et/ou cacher des objets 200 par exemple. Le verrouillage et le débrayage sont dépendants, combinés, et assurés par le moyen de maintien 120, tous deux grâce à la manette 129. La manette reste toutefois accessible et manipulable par une action simple, à savoir un pivotement ou une rotation par exemple de l'ordre d'un quart de tour. Le verrouillage et le débrayage sont imbriqués ce qui simplifie le fonctionnement.

Ainsi, par exemple, la manette permet :
- de libérer l'axe de serrage / guidage 128 de la béquille, par exemple quand elle est tournée vers le bas,
- de bloquer l'axe de serrage / guidage de la béquille quand elle est tournée vers le haut ou quand elle s'étend sensiblement horizontalement vers l'arrière comme illustré sur les figures,
- de faciliter les manipulations du support 100 de haut en bas et inversement par l'utilisateur.

Le serrage physique ou pincement de la béquille 9 et du renfort 10 par les parties 31A, 31B du manchon 31 est fiable et robuste.

A noter que l'électrification peut être prévue dans des glissières ou gorges ou rainures spécifiques du support 100. Dans le mode de réalisation illustré et ses première et deuxième variantes, la connectivité électrique est assurée par l'arrière du profilé, de préférence depuis la structure de la caisse. Cela permet de garder une conductivité des objets 200 embarqués même dans la position basse.

Alternativement, l'alimentation électrique peut venir de l'avant. Dans ce cas, l'alimentation électrique n'est pas interrompue au niveau du moyen de maintien 120 malgré le guidage vertical et sensiblement rectiligne au sein de la lumière 121 ou des lumières 121, 122. Par exemple, un fil d'alimentation électrique, extensible ou non, assure la jonction électrique au niveau du moyen de maintien malgré la distance et/ou la différence de hauteur entre les positions basse et haute du support 100.

En remarque, la solution atteint donc l'objet recherché de faciliter l'accès et/ou la sortie à une place assise d'un côté du véhicule depuis une porte ou ouverture située du côté opposé, et ce, tout en conservant une interface de type poutre s'étendant longitudinalement permettant de supporter et/ou recharger et/ou faire coulisser des appareils électriques et/ou électroniques et présente les avantages suivants :
- L'agencement peut être monté de manière optionnelle suivant le niveau de finition du véhicule, par exemple à la fin de la chaîne de production, ou encore monté après la vente du véhicule ;
- L'installation de l'agencement est sans conséquence sur la structure de caisse ou d'autres parties du véhicule ;
- L'agencement peut convenir à tous les types de véhicules, en particulier à toutes les gammes. L'agencement convient particulièrement aux véhicules adaptés à une conduite autonome (ou en anglais « autonomous driving » ou « AD »), ces véhicules permettant typiquement de déplacer ou de pivoter les sièges sans gêne par rapport au support. De plus les objets ou accessoires maintenus sur le support sont déplaçables et partageables en fonction de la position des passagers.

## Revendications

1. Agencement (20) comprenant :
- une caisse (2) de véhicule, notamment de véhicule automobile (1), la caisse (2) comprenant une partie avant (3), notamment une partie avant (3) comprenant un tablier (5) et/ou un tunnel de soubassement (11), et une partie arrière (4), notamment une paroi (6) de la caisse (2) au niveau des dossiers de sièges arrières (7),
- un support (100) intérieur de type poutre destiné à permettre la fixation et/ou le coulissement et/ou la recharge électrique d'au moins un objet (200), notamment un objet électrique et/ou électronique, le support (100) comprenant au moins un moyen de fixation (110) d'un tel objet (200), notamment une rainure (110A ; 110B ; 110C), s'étendant au moins partiellement suivant la longueur du support (100), le support (100) s'étendant ou s'étendant sensiblement selon la direction longitudinale du véhicule entre la partie avant (3) de la caisse (2) et la partie arrière (4) de la caisse (2), **caractérisé en ce que** l'agencement (20) comprend :
- une liaison pivot (161), d'axe de direction transversale ou sensiblement transversale, de fixation du support (100) au niveau de la partie arrière (4) de la caisse (2) de sorte à permettre une rotation du support (100) autour de l'axe ou sensiblement autour de l'axe de la liaison pivot (161), notamment entre une position haute (PH) et une position basse (PB), et
- un moyen de maintien (120) en position du support (100) au niveau de la partie avant (3) de la caisse (2).

2. Agencement (20) selon la revendication précédente, **caractérisé en ce que** l'agencement (20) comprend une béquille (9) de traverse (8) de planche de bord, notamment comprenant une première tôle (9') conformée s'étendant sensiblement verticalement et longitudinalement, la béquille (9) comprenant un élément de réglage du moyen de maintien (120), notamment une première lumière (121).

3. Agencement (20) selon la revendication précédente, **caractérisé en ce que** l'agencement (20) comprend un renfort (10), notamment une deuxième tôle (10') conformée s'étendant sensiblement verticalement et longitudinalement, la béquille (9) et le renfort (10) étant fixés l'un à l'autre, notamment par soudage, et/ou **en ce que** la béquille (9) et le renfort (10) sont fixés au tablier (5) et/ou au tunnel de soubassement (11), notamment par soudage.

4. Agencement (20) selon la revendication précédente, **caractérisé en ce que** le moyen de maintien (120) comprend une première lumière (121) ménagée dans la béquille (9) et une deuxième lumière (122) ménagée dans le renfort (10), la première lumière (121) et la deuxième lumière (122) étant agencées en vis-à-vis l'une de l'autre.

5. Agencement (20) selon l'une des revendications 2 à 4, **caractérisé en ce que** le moyen de maintien (120) comprend un moyen de serrage (127) de la béquille (9), notamment de la béquille (9) et du renfort (10), s'étendant selon une direction transversale ou sensiblement transversale, notamment un axe de serrage (128) traversant la première lumière (121) et la deuxième lumière (122), de sorte à verrouiller ou déverrouiller le support (100) par rapport à la béquille (9), notamment en position haute (PH) ou en position basse (PB).

6. Agencement (20) selon la revendication précédente, **caractérisé en ce que** le moyen de serrage (127) comprend une manette (129) d'actionnement du moyen de serrage (127), notamment pivotante de sorte à libérer le serrage de la béquille (9), ou de la béquille (9) et du renfort (10), en cas de pivotement dans un premier sens (S1) et de sorte à assurer le serrage contre la béquille (9), ou contre la béquille (9) et le renfort (10), en cas de pivotement dans un deuxième sens (S2), opposé au premier sens (S1).

7. Agencement (20) selon l'une des revendications précédentes, **caractérisé en ce que** le moyen de maintien (120) comprend un moyen de rappel (123), notamment vers la position haute (PH).

8. Agencement (20) selon la revendication précédente, **caractérisé en ce que** le moyen de rappel (123) comprend :
- au moins un ressort (124),
- une patte (125 ; 125'), notamment réglable ou fixe par rapport au support (10) et/ou par rapport à la béquille (9),
l'au moins un ressort (124) s'étendant notamment entre la patte (125 ; 125') et le moyen de serrage (127), notamment l'axe de serrage (128).

9. Agencement (20) selon l'une des revendications précédentes, **caractérisé en ce que** l'angle de rotation du support (100) entre la position haute (PH) et la position basse (PB) est compris entre 3 degrés et 10 degrés, notamment de l'ordre de 5 degrés.

10. Véhicule, notamment véhicule automobile (1), **caractérisé en ce qu'**il comprend un agencement (20) selon l'une des revendications précédentes.

## Patentansprüche

1. Anordnung (20), umfassend:
- eine Karosserie (2) eines Fahrzeugs, insbesondere eines Kraftfahrzeugs (1), wobei die Karosserie (2) einen vorderen Teil (3), insbesondere einen vorderen Teil (3) mit einer Schürze (5) und/oder einem Unterbodentunnel (11), und einen hinteren Teil (4), insbesondere eine Wand (6) der Karosserie (2) im Bereich der Lehnen der hinteren Sitze (7), umfasst,
- einen balkenartigen inneren Träger (100), der dazu bestimmt ist, die Befestigung und/oder das Gleiten und/oder das elektrische Aufladen zumindest eines Objekts (200), insbesondere eines elektrischen und/oder elektronischen Objekts, zu ermöglichen, wobei der Träger (100) zumindest ein Mittel (110) zur Befestigung eines solchen Objekts (200), insbesondere eine Nut (110A; 110B; 110C), umfasst, das sich zumindest teilweise entlang der Länge des Trägers (100) erstreckt, wobei sich der Träger (100) ganz oder im Wesentlichen entlang der Längsrichtung des Fahrzeugs zwischen dem vorderen Teil (3) der Karosserie (2) und dem hinteren Teil (4) der Karosserie (2) erstreckt, **dadurch gekennzeichnet, dass** die Anordnung (20) Folgendes umfasst:
- eine Drehverbindung (161) mit einer quer oder im Wesentlichen quer ausgerichteten Achse zur Befestigung des Trägers (100) im Bereich des hinteren Teils (4) der Karosserie (2), um eine Drehung des Trägers (100) um die Achse oder im Wesentlichen um die Achse der Drehverbindung (161) zu ermöglichen, insbesondere zwischen einer hohen Position (PH) und einer tiefen Position (PB), und
- ein Mittel (120) zum In-Position-Halten des Trägers (100) im Bereich des vorderen Teils (3) der Karosserie (2).

2. Anordnung (20) nach dem vorangehenden Anspruch, **dadurch gekennzeichnet, dass** die Anordnung (20) eine Stütze (9) einer Armaturenbrettstrebe (8) umfasst, insbesondere mit einem ersten Formblech (9'), das sich im Wesentlichen vertikal und in Längsrichtung erstreckt, wobei die Stütze (9) ein Element zum Verstellen des Haltemittels (120), insbesondere einen ersten Schlitz (121), umfasst.

3. Anordnung (20) nach dem vorangehenden Anspruch, **dadurch gekennzeichnet, dass** die Anordnung (20) eine Verstärkung (10) umfasst, insbesondere ein zweites Formblech (10'), das sich im Wesentlichen vertikal und in Längsrichtung erstreckt, wobei die Stütze (9) und die Verstärkung (10) aneinander befestigt sind, insbesondere durch Schweißen,
und/oder dass die Stütze (9) und die Verstärkung (10) an der Schürze (5) und/oder am Unterbodentunnel (11) befestigt sind, insbesondere durch Schweißen.

4. Anordnung (20) nach dem vorangehenden Anspruch, **dadurch gekennzeichnet, dass** das Haltemittel (120) einen in der Stütze (9) angeordneten ersten Schlitz (121) und einen in der Verstärkung (10) angeordneten zweiten Schlitz (122) umfasst, wobei der erste Schlitz (121) und der zweite Schlitz (122) einander gegenüberliegend angeordnet sind.

5. Anordnung (20) nach einem der Ansprüche 2 bis 4, **dadurch gekennzeichnet, dass** das Haltemittel (120) ein Mittel (127) zum Einspannen der Stütze (9), insbesondere der Stütze (9) und der Verstärkung (10), umfasst, das sich in einer quer oder im Wesentlichen quer verlaufenden Richtung erstreckt, insbesondere eine Einspannachse (128), die durch den ersten Schlitz (121) und den zweiten Schlitz (122) verläuft, um den Träger (100) relativ zur Stütze (9) zu ver- oder entriegeln, insbesondere in der hohen Position (PH) oder in der tiefen Position (PB).

6. Anordnung (20) nach dem vorangehenden Anspruch, **dadurch gekennzeichnet, dass** das Einspannmittel (127) einen Hebel (129) zur Betätigung des Einspannmittels (127) umfasst, der insbesondere so drehbar ist, dass er bei Drehung in eine erste Richtung (S1) die Einspannung der Stütze (9) bzw. der Stütze (9) und der Verstärkung (10) löst und bei Drehung in eine zur ersten Richtung (S1) entgegengesetzte zweite Richtung (S2) die Einspannung gegen die Stütze (9) bzw. gegen die Stütze (9) und die Verstärkung (10) gewährleistet.

7. Anordnung (20) nach einem der vorangehenden Ansprüche, **dadurch gekennzeichnet, dass** das Haltemittel (120) ein Mittel (123) zum Zurückholen, insbesondere in die hohe Position (PH), umfasst.

8. Anordnung (20) nach dem vorangehenden Anspruch, **dadurch gekennzeichnet, dass** das Rückholmittel (123) Folgendes umfasst:
- zumindest eine Feder (124),
- eine Lasche (125; 125'), die insbesondere relativ zum Träger (10) und/oder relativ zur Stütze (9) verstellbar oder feststehend ist,
wobei sich die zumindest eine Feder (124) insbesondere zwischen der Lasche (125; 125') und dem Einspannmittel (127), insbesondere der Einspannachse (128), erstreckt.

9. Anordnung (20) nach einem der vorangehenden Ansprüche, **dadurch gekennzeichnet, dass** der Drehwinkel des Trägers (100) zwischen der hohen Position (PH) und der tiefen Position (PB) zwischen 3 Grad und 10 Grad, insbesondere in der Größenordnung von 5 Grad, liegt.

10. Fahrzeug, insbesondere Kraftfahrzeugkarosserie (1), **dadurch gekennzeichnet, dass** es eine Anordnung (20) nach einem der vorangehenden Ansprüche umfasst.

## Claims

1. Arrangement (20) comprising:
- a bodyshell (2) of a vehicle, notably an automobile (1), the bodyshell (2) comprising a front part (3), notably a front part (3) comprising a bulkhead (5) and/or a body understructure hump (11), and a rear part (4), notably a wall (6) of the bodyshell (2) at the level of the backrests of the rear seats (7),
- an interior support (100) of the beam type intended to allow at least one object (200), notably an electrical and/or electronic object to be attached and/or slid and/or electrically recharged, the support (100) comprising at least one fixing means (110) for securing such an object (200), notably a groove (110A; 110B; 110C) extending at least partially along the length of the support (100), the support (100) extending or substantially extending in the longitudinal direction of the vehicle between the front part (3) of the bodyshell (2) and the rear part (4) of the bodyshell (2), **characterized in that** the arrangement (20) comprises:
- a pivot connection (161), the axis of which is directed transversely or substantially transversely, for securing the support (100) at the level of the rear part (4) of the bodyshell (2) so as to allow the support (100) to rotate about the axis or substantially about the axis of the pivot connection (161), notably between a raised position (PH) and a lowered position (PB), and
- a retaining means (120) for keeping the support (100) in position at the level of the front part (3) of the bodyshell (2).

2. Arrangement (20) according to the preceding claim, **characterized in that** the arrangement (20) comprises a dashboard crossmember (8) stand leg (9), notably comprising a first shaped sheet (9') extending substantially vertically and longitudinally, the stand leg (9) comprising an element for adjusting the retaining means (120), notably a first slot (121).

3. Arrangement (20) according to the preceding claim, **characterized in that** the arrangement (20) comprises a reinforcement (10), notably a second shaped sheet (10') extending substantially vertically and longitudinally, the stand leg (9) and the reinforcement (10) being fixed to one another, notably by welding,
and/or **in that** the stand leg (9) and the reinforcement (10) are fixed to the bulkhead (5) and/or to the body understructure hump (11), notably by welding.

4. Arrangement (20) according to the preceding claim, **characterized in that** the retaining means (120) comprises a first slot (121) formed in the stand leg (9) and a second slot (122) formed in the reinforcement (10), the first slot (121) and the second slot (122) being arranged facing one another.

5. Arrangement (20) according to one of Claims 2 to 4, **characterized in that** the retaining means (120) comprises a clamping means (127) for clamping the stand leg (9), notably the stand leg (9) and the reinforcement (10), extending in a transverse or substantially transverse direction, notably a clamping pin (128) passing through the first slot (121) and the second slot (122) so as to lock or unlock the support (100) with respect to the stand leg (9), notably in the raised position (PH) or in the lowered position (PB).

6. Arrangement (20) according to the preceding claim, **characterized in that** the clamping means (127) comprises a lever handle (129) for actuating the clamping means (127), this notably pivoting so as to release the clamping of the stand leg (9), or of the stand leg (9) and of the reinforcer (10), if pivoted in a first direction (S1) and so as to clamp against the stand leg (9), or against the stand leg (9) and the reinforcement (10), if pivoted in a second direction (S2) the opposite of the first direction (S1).

7. Arrangement (20) according to one of the preceding claims, **characterized in that** the retaining means (120) comprises a return means (123), notably for returning towards the raised position (PH).

8. Arrangement (20) according to the preceding claim, **characterized in that** the return means (123) comprises:
- at least one spring (124),
- a tab (125; 125'), notably adjustable or fixed with respect to the support (10) and/or with respect to the stand leg (9),
the at least one spring (124) extending notably between the tab (125; 125') and the clamping means (127), notably the clamping pin (128).

9. Arrangement (20) according to one of the preceding claims, **characterized in that** the angle of rotation of the support (100) between the raised position (PH) and the lowered position (PB) is comprised between 3 degrees and 10 degrees, notably of the order of 5 degrees.

10. Vehicle, notably automobile (1), **characterized in that** it comprises an arrangement (20) according to one of the preceding claims.
